# FASCICULE DE BREVET EUROPEEN

(11) **EP 4 054 871 B1**
(45) Date de publication et mention de la délivrance du brevet: **30.07.2025**
(21) Numéro de dépôt: 20799746.1
(22) Date de dépôt: 05.11.2020
(51) Int. Cl.: B60J 10/36, B60J 10/76, B60R 13/04

(54) **AGENCEMENT DE JOINT DE VITRE COMPRENANT UN MOYEN DE MAINTIEN EN POSITION D'UN ENJOLIVEUR**
FENSTERGELENKANORDNUNG MIT EINER EINRICHTUNG ZUM HALTEN EINER VERKLEIDUNG IN EINER POSITION
WINDOW JOINT ARRANGEMENT COMPRISING A MEANS FOR HOLDING A TRIM IN POSITION

(30) Priorité: 05.11.2019 FR 1912381
(43) Date de publication de la demande: 14.09.2022
(73) Titulaire: Renault s.a.s, 92100 Boulogne Billancourt (FR)
(72) Inventeur: VOIRIN, Michel, 76520 Franqueville saint Pierre (FR); LE COEDIC, Yoann, 78120 Rambouillet (FR); WATHY, Philippe, 92360 MEUDON LA FORET (FR)
(86) Numéro de dépôt international: PCT/EP2020/081138
(87) Numéro de publication internationale: WO 2021/089701

(56) Documents cités:
- EP-A1- 2 614 977
- DE-A1- 102009 011 216
- DE-U1- 9 408 725
- US-A- 5 519 968

## Description

### Domaine technique de l'invention

L'invention concerne un agencement de joint de vitre de véhicule automobile. L'invention porte aussi sur un véhicule automobile comprenant un tel agencement.

### Etat de la technique antérieure

L'esthétique d'un véhicule, en particulier d'un véhicule automobile, est importante. Ainsi, un enjoliveur est généralement implanté au niveau du contour de vitre, en particulier de la ou des vitres latérales d'un même côté du véhicule. Ce contour est généralement appelé « joint de vitre ». Un tel enjoliveur est généralement fixé le long d'un profilé extrudé par un système de clippage. Pour un joint de vitre d'une ou plusieurs vitres latérales, un tel enjoliveur est généralement clippé selon la direction transversale Y du véhicule. Ainsi un tel enjoliveur est maintenu par clippage selon la direction transversale, comme cela est décrit dans le document US 5 519 968 A.

Son maintien en position selon la direction longitudinale X du véhicule est obtenu par le contact d'une lèvre du profilé extrudé contre l'enjoliveur et par conséquent du frottement qui résulte entre la lèvre et l'enjoliveur.

Toutefois, du fait du vieillissement du profilé extrudé, en particulier du vieillissement de la lèvre, le contact entre la lèvre et l'enjoliveur se perd au fil du temps. Il en résulte que l'enjoliveur n'est pas maintenu correctement toute la durée de vie du véhicule. Plus précisément, l'enjoliveur glisse le long du profilé, selon la direction longitudinale du véhicule pour un joint de vitre latéral. Ceci n'est pas acceptable en termes d'esthétique et peut engendrer un dysfonctionnement lors de la fermeture d'un ouvrant équipé d'un tel enjoliveur et/ou un chevauchement d'un tel enjoliveur avec une partie de la carrosserie du véhicule par exemple.

### Présentation de l'invention

Le but de l'invention est de fournir un agencement de joint de vitre remédiant aux inconvénients ci-dessus.

### Résumé de l'invention

Pour atteindre cet objectif, l'invention porte sur un agencement de joint de vitre d'une vitre de véhicule, notamment de véhicule automobile, selon la revendication 1.

Le moyen de maintien peut comprendre une butée.

Le moyen de maintien peut être une excroissance s'étendant perpendiculairement ou sensiblement perpendiculairement par rapport à la direction longitudinale de l'enjoliveur.

L'enjoliveur peut comprendre une découpe destinée à venir en butée contre le moyen de maintien.

Le moyen de maintien peut comprendre une patte s'étendant vers un habitacle d'un tel véhicule, la patte pouvant être ménagée sur l'enjoliveur et pouvant être destinée à venir s'encastrer dans l'insert et/ou dans l'élément de surmoulage.

L'invention porte encore sur un véhicule, notamment un véhicule automobile, comprenant au moins un agencement tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue partielle de côté d'un véhicule automobile selon un mode de réalisation.
La figure 2 est une vue d'un joint de vitre d'un agencement du véhicule automobile selon un mode de réalisation.
La figure 3 est une vue de détail du joint de vitre de l'agencement du véhicule automobile selon le mode de réalisation illustré sur la figure 1, sans enjoliveur.
La figure 4 est une coupe selon un plan perpendiculaire à la direction longitudinale d'un enjoliveur de l'agencement selon le mode de réalisation.
La figure 5 est une coupe au niveau d'une découpe de l'enjoliveur, selon un plan perpendiculaire à la direction longitudinale de l'enjoliveur, selon le mode de réalisation.
La figure 6 est une coupe selon un plan perpendiculaire à la direction longitudinale de l'enjoliveur de l'agencement selon un mode de réalisation revendiqué.
La figure 7 est une coupe selon un plan perpendiculaire à la direction longitudinale de l'enjoliveur de l'agencement selon une première variante du mode de réalisation non revendiqué.
La figure 8 est une vue en perspective d'un enjoliveur de l'agencement selon une deuxième variante du mode de réalisation.
La figure 9 est une coupe selon un plan perpendiculaire à la direction longitudinale de l'enjoliveur de l'agencement selon un deuxième mode de réalisation.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

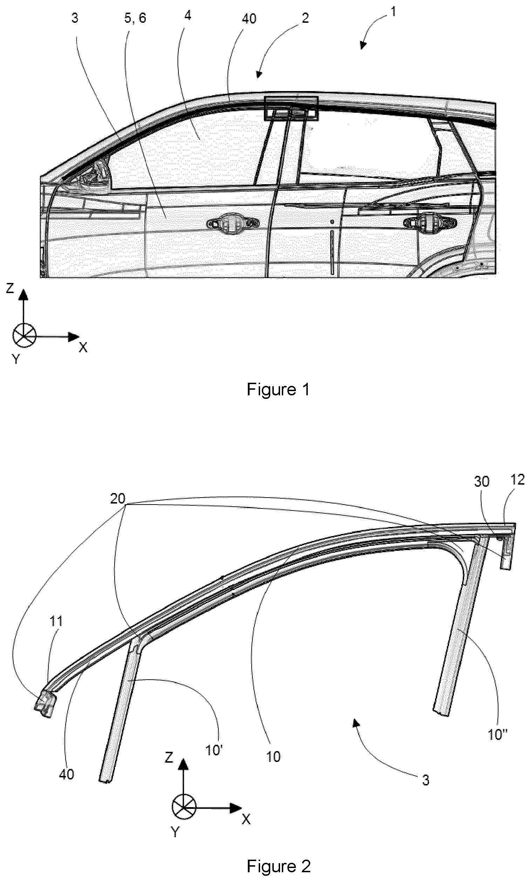

La figure 1 illustre un mode de réalisation d'un véhicule, en particulier un véhicule automobile 1. Le véhicule peut être par exemple un véhicule particulier ou un véhicule utilitaire, un camion ou un bus. Le véhicule comprend au moins un agencement 2 de joint de vitre 3 d'au moins une vitre 4. Le joint de vitre 3, aussi appelé « coulisse », comprend au moins une partie du contour de la vitre 4.

Le joint de vitre 3 comprend au moins un profilé extrudé 10. Par exemple, pour une vitre latérale avant gauche, comme illustrée sur la figure 2, le joint de vitre 3 comprend trois profilés extrudés 10, 10', 10". Le joint de vitre comprend encore au moins un élément de surmoulage 20, de préférence en matière souple tel que du TPE. Par exemple, pour une vitre avant comme illustrée sur la figure 2, quatre éléments de surmoulage 20 sont prévus. De préférence les éléments de surmoulage 20 assurent le maintien entre les différents profilés et/ou le maintien entre un ou des profilés et une caisse du véhicule. Avantageusement, un insert 30 est ajouté lors de l'opération de surmoulage d'un élément de surmoulage 20 agencé par exemple au niveau d'une deuxième extrémité 12 du profilé 10. L'insert 30 est de préférence en matière rigide plastique tel que du polypropylène PP ou du polyamide PA ou du polyacétal POM par exemple. Le joint de vitre 3 comprend encore un enjoliveur 40, de préférence en inox, voire en inox chromé. A noter que de préférence, l'enjoliveur est mis en forme par profilage à froid à partir d'une bobine d'acier qui est déroulée avant de passer dans des trains de galets. Une fois le profil de l'enjoliveur voulu obtenu, le profilé d'enjoliveur est découpé puis emboutis aux extrémités pour obtenir une bonne finition. L'enjoliveur 40 est fixé sur le profilé 10, de préférence par clippage, après l'obtention du joint de vitre.

L'enjoliveur 40 est une pièce ayant une dimension largement supérieure à ses deux autres dimensions. La dimension supérieure aux autres dimensions s'étend selon une direction définie comme étant la direction longitudinale L de l'enjoliveur. Une direction transversale T de l'enjoliveur s'étend perpendiculairement à la direction longitudinale L de l'enjoliveur. De préférence, le clippage de l'enjoliveur sur le profilé est assuré selon la direction transversale ou sensiblement selon la direction transversale T de l'enjoliveur.

Par exemple le véhicule comprend un agencement 2 au niveau d'une porte 5 et/ou au niveau d'un élément de côté de caisse 6 côté gauche. Par exemple le véhicule comprend un agencement au niveau d'une porte et/ou au niveau d'un élément de côté de caisse côté droit. Ainsi le véhicule peut comprendre un agencement de chaque côté. Alternativement, le véhicule peut comprendre plusieurs agencements d'un seul côté, voire plusieurs agencements de chaque côté, en particulier en cas de véhicule de type bus. De préférence l'agencement 2 est au niveau d'une vitre 4 ou de plusieurs vitres. La ou les vitres peuvent être fermées à demeure, c'est-à-dire non déplaçables par rapport à la caisse. Alternativement, la ou les vitres peuvent s'ouvrir, par exemple en coulissant au sein d'un caisson de porte ou au sein d'un côté de caisse ou encore à l'extérieur de la caisse. Par exemple, la ou les vitres pivotent pour s'ouvrir et se fermer.

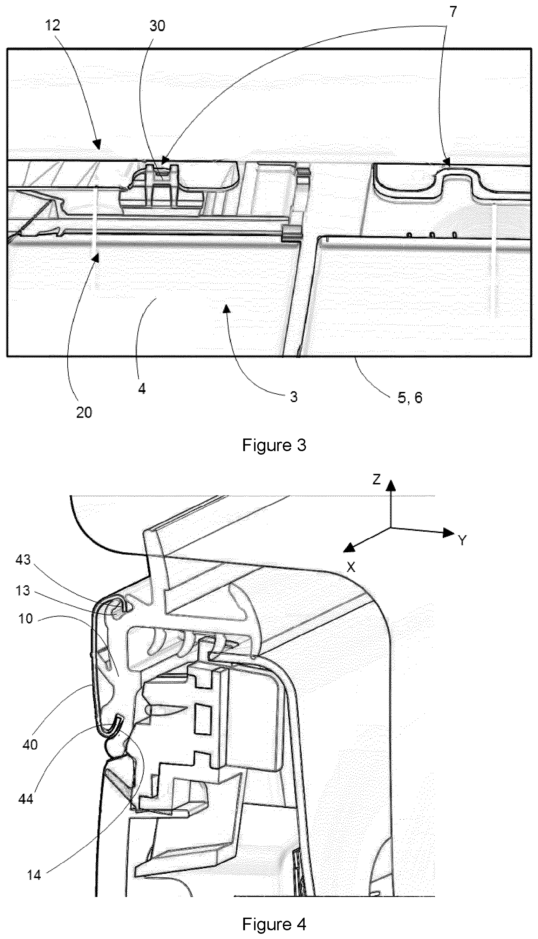

Plus précisément, l'agencement 2 comprend la porte 5 et/ou l'élément de côté de caisse 6. La porte 5 et/ou l'élément de côté de caisse 6 est ou sont destiné(s) à recevoir l'au moins une vitre 4. Comme illustré sur les figures 2 et 3, l'agencement 2 comprend le profilé extrudé 10 comprenant une première extrémité 11 et une deuxième extrémité 12. L'agencement 2 comprend encore au moins un élément de surmoulage 20 en matière souple, par exemple agencé au niveau de la première extrémité 11 et/ou de la deuxième extrémité 12 du profilé extrudé 10.

L'agencement 2 comprend encore l'insert 30 en matière rigide. L'insert 30 est par exemple surmoulé, au moins partiellement, avec l'élément de surmoulage 20.

L'agencement 2 comprend encore l'enjoliveur 40. L'enjoliveur 40 a de préférence une section en C et s'étend principalement suivant sa longueur suivant une direction longitudinale. En cas joint de vitre 3 de vitre 4 latérale, la direction longitudinale de l'enjoliveur est parallèle ou sensiblement parallèle à la direction longitudinale du véhicule. Avantageusement, l'enjoliveur 40 est en acier inoxydable, de préférence en acier inoxydable chromé. L'enjoliveur coopère le long du profilé extrudé 10 pour se fixer par clippage sur le profilé extrudé 10 de préférence. Avantageusement, le C de la section de l'enjoliveur est formé par un pliage supérieur 43 et un pliage inférieur 44, comme illustré sur la figure 4. De préférence, le profilé 10 comprend deux rainures 13, 14 aptes à coopérer avec chaque pliage 43, 44.

Comme illustré sur la figure 3, la porte 5 et/ou l'élément de côté de caisse 6 comprend au moins une encoche 7 de réception et/ou de positionnement de l'insert 30. Ainsi, l'insert en matière rigide 30, au moins partiellement dans le surmoulage 20 du joint de vitre 3 est coincé dans l'au moins une encoche 7. L'insert 30 est donc parfaitement maintenu selon la direction longitudinale du véhicule pour un joint de vitre latérale.

L'agencement 2 comprend encore un moyen de maintien 50 de l'enjoliveur 40. Ce moyen de maintien permet d'empêcher un déplacement de l'enjoliveur 40 par rapport au profilé extrudé 10 selon la direction longitudinale L de l'enjoliveur 40 et/ou selon la direction transversale T de l'enjoliveur. Ainsi, le moyen de maintien empêche le déplacement selon la direction longitudinale X du véhicule de l'enjoliveur. De préférence, le moyen de maintien 50 est assuré par un obstacle et/ou comprend une butée 51.

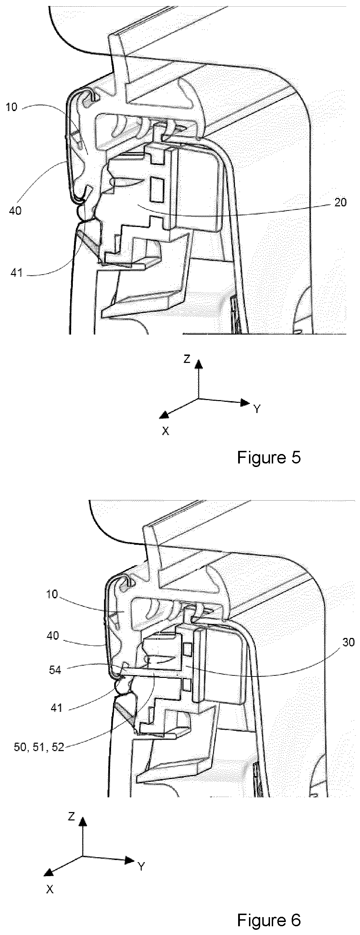

Selon un mode de réalisation revendiqué illustré sur la figure 6, l'insert 30 comprend le moyen de maintien 50 de l'enjoliveur 40. De préférence, le moyen de maintien 50 est une excroissance 52 s'étendant perpendiculairement ou sensiblement perpendiculairement par rapport à la direction longitudinale L de l'enjoliveur 40.

Pour rappel, en cas de joint de vitre latérale, par exemple la direction longitudinale de l'enjoliveur s'étend, ou s'étend sensiblement, suivant la direction longitudinale X du véhicule et l'excroissance 52 s'étend, ou s'étend sensiblement, selon la direction transversale Y du véhicule, vers l'extérieur du véhicule.

Avantageusement, comme illustré en particulier sur les figures 5, 6 et 8, l'enjoliveur 40 comprend une découpe 41. Cette découpe ou épargne ou encoche peut être réalisée lors de l'opération de découpe des extrémités de l'enjoliveur 40. De préférence, l'encoche 41 est réalisée au niveau du pliage inférieur 44 de l'enjoliveur.

De préférence, une extrémité 54 de l'excroissance vient au contact de l'enjoliveur 40 au niveau de la découpe 41. La découpe 41 vient donc en butée contre l'extrémité 54 de l'excroissance 52 et bloque tout déplacement selon la direction longitudinale de l'enjoliveur 40 le long du profilé 10 sur lequel il est clippé. Avantageusement, la forme de la découpe 41 épouse ou épouse sensiblement la forme de l'excroissance 52, en particulier la forme de l'extrémité 54 de l'excroissance. Ainsi, l'excroissance et la découpe coopère l'une avec l'autre de sorte à s'imbriquer lors du clippage de l'enjoliveur 40 sur le profilé 10.

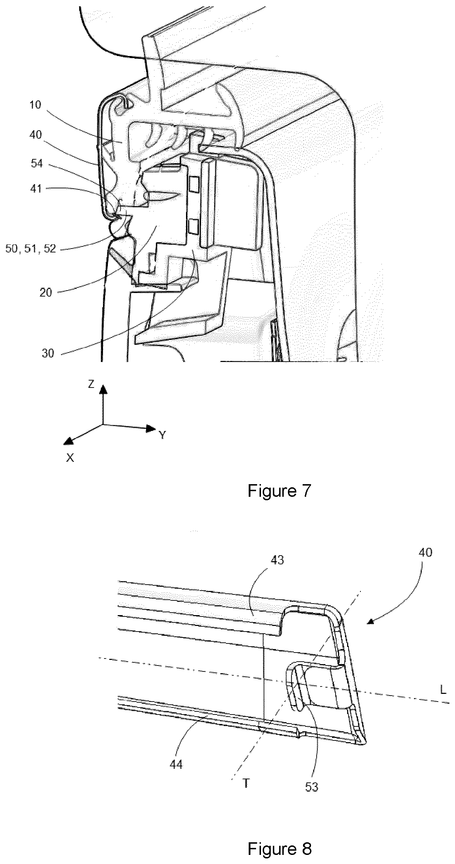

Selon une première variante non revendiqué illustrée sur la figure 7, l'élément de surmoulage 20 comprend le moyen de maintien 50 de l'enjoliveur 40. De préférence, le moyen de maintien 50 est une excroissance 52 s'étendant perpendiculairement ou sensiblement perpendiculairement par rapport à la direction longitudinale de l'enjoliveur 40. Là encore, l'extrémité 54 de l'excroissance vient au contact de l'enjoliveur 40 au niveau de la découpe 41. La découpe 41 vient donc en butée contre l'extrémité 54 de l'excroissance 52 et bloque tout déplacement selon la direction longitudinale de l'enjoliveur 40 le long du profilé 10 sur lequel il est clippé.

Selon une deuxième variante illustrée sur la figure 8, le moyen de maintien 50 comprend une patte 53 ou protubérance s'étendant vers un habitacle du véhicule. La patte 53 est ménagée sur l'enjoliveur 40. La patte 53 s'étend alors selon une direction T perpendiculaire ou sensiblement perpendiculaire à la direction longitudinale L de l'enjoliveur 40. En cas de joint de vitre latérale, la direction T s'étend parallèlement ou sensiblement parallèlement à la direction transversale Y du véhicule. La patte 53 peut par exemple venir s'encastrer dans l'insert 30. Dans ce cas, une rainure s'étendant par exemple perpendiculairement aux directions T et L peut être ménagée dans l'insert rigide 30 pour recevoir la patte 53 et bloquer efficacement la patte 53. La patte 53 peut alternativement ou en complément venir s'encastrer dans l'élément de surmoulage 20. L'encastrement de la patte 53 dans l'élément de surmoulage 20 assure la fonction d'arrêt de l'enjoliveur 40 le long du profilé 10.

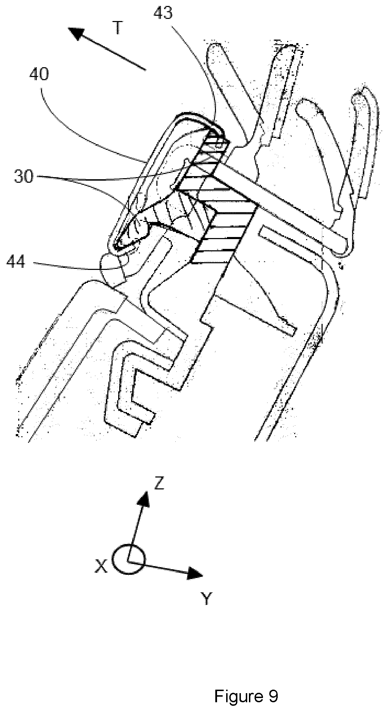

Alternativement ou en complément, comme illustré sur la figure 9, selon un deuxième mode de réalisation, l'insert en matière rigide 30 (hachuré) favorise lui-même la tenue selon la direction transversale T de l'enjoliveur 40. Dans ce cas, l'insert 30 vient compléter le maintien selon la direction transversale T de l'enjoliveur 40 sur le profilé 10 réalisé via les pliages 43, 44 de la section en C de l'enjoliveur.

En résumé, la solution permet de bloquer mécaniquement l'enjoliveur 40 pour que l'enjoliveur reste en position au cours de toute la durée de vie du véhicule. Ce blocage est assuré selon la direction longitudinale du véhicule pour un joint de vitre latérale. Ainsi, l'insert 30 en matière rigide rempli une autre fonction que celle de permettre de stopper les profilés.

Ainsi le blocage est réalisé mécaniquement, via un obstacle, selon la direction longitudinale de l'enjoliveur en inox chromé par rapport au profilé sur lequel il est fixé. Ce type de blocage est donc fiable et durable.

A noter que l'insert étant une pièce déjà existante dans le joint de vitre ou coulisse, c'est une solution peu coûteuse.

Ainsi, même en cas de vieillissement du profilé extrudé, l'enjoliveur ne glisse pas le long du profilé. L'esthétique de l'enjoliveur, et par voie de conséquence du véhicule, n'est pas altérée au fil du temps. L'enjoliveur ne vient pas entraver ou gêner l'ouverture ou la fermeture de l'ouvrant sur lequel ou près duquel il est installé.

La solution atteint l'objectif d'empêcher tout déplacement de l'enjoliveur le long du profilé sur lequel il est agencé et présente les avantages suivants :
- elle est applicable à toutes les gammes de véhicules automobiles ;
- elle est facile à mettre en œuvre.

Bien que la solution ait principalement été décrite pour un joint de vitre s'étendant latéralement, elle peut être appliquée à un contour de pare-brise ou de lunette arrière. Le ou les enjoliveurs s'étendent alors transversalement ou sensiblement transversalement et dans des plans verticaux et longitudinaux ou sensiblement dans des plans verticaux et longitudinaux.

## Revendications

1. Agencement (2) de joint de vitre (3) d'une vitre (4) de véhicule, notamment de véhicule automobile (1), comprenant :
une porte (5) et/ou un élément de côté de caisse (6) d'un tel véhicule destiné à recevoir une telle vitre (4),
un profilé extrudé (10) comprenant une première extrémité (11) et une deuxième extrémité (12),
un élément de surmoulage (20) en matière souple, notamment agencé au niveau de la première extrémité (11) et/ou de la deuxième extrémité (12) du profilé extrudé (10),
un enjoliveur (40), notamment un enjoliveur en acier inoxydable, notamment en acier inoxydable chromé, coopérant le long du profilé extrudé (10) pour se clipper au niveau du profilé extrudé (10),
la porte (5) et/ou l'élément de côté de caisse (6) comprenant une encoche (7) de réception et/ou de positionnement de l'insert (30), un moyen de maintien (50) de l'enjoliveur (40) de sorte à empêcher un déplacement de l'enjoliveur (40) par rapport au profilé extrudé (10) selon la direction longitudinale de l'enjoliveur (40),
**caractérisé en ce que** l'agencement (2) comprend un insert (30) en matière rigide, notamment un insert (30) surmoulé au moins partiellement par l'élément de surmoulage (20), et **en ce que** l'insert (30) comprend le moyen de maintien (50) de l'enjoliveur (40).

2. Agencement (2) selon la revendication précédente, **caractérisé en ce que** le moyen de maintien (50) empêche un déplacement de l'enjoliveur (40) par rapport au profilé extrudé (10) selon la direction transversale de l'enjoliveur (40).

3. Agencement (2) selon la revendication1 ou 2, **caractérisé en ce que** le moyen de maintien (50) comprend une butée (51).

4. Agencement (2) selon l'une des revendications précédentes, **caractérisé en ce que** le moyen de maintien (50) est une excroissance (52) s'étendant perpendiculairement ou sensiblement perpendiculairement par rapport à la direction longitudinale de l'enjoliveur (40).

5. Agencement (2) selon l'une des revendications précédentes, **caractérisé en ce que** l'enjoliveur (40) comprend une découpe (41) destinée à venir en butée contre le moyen de maintien (50).

6. Agencement (2) selon la revendication 1, 2 ou 3, **caractérisé en ce que** le moyen de maintien (50) comprend une patte (53) s'étendant vers un habitacle (9) d'un tel véhicule, la patte (53) étant ménagée sur l'enjoliveur (40) et étant destinée à venir s'encastrer dans l'insert (30) et/ou dans l'élément de surmoulage (20).

7. Véhicule, notamment véhicule automobile (1), **caractérisé en ce qu'**il comprend au moins un agencement (2) selon l'une des revendications précédentes.

## Patentansprüche

1. Anordnung (2) einer Fensterscheibendichtung (3) einer Fensterscheibe (4) eines Fahrzeugs, insbesondere eines Kraftfahrzeugs (1), umfassend:
eine Tür (5) und/oder ein Karosserieseitenelement (6) eines solchen Fahrzeugs, das zum Aufnehmen einer solchen Fensterscheibe (4) bestimmt ist,
ein extrudiertes Profil (10), das ein erstes Ende (11) und ein zweites Ende (12) umfasst,
ein Umspritzungselement (20) aus weichem Material, das insbesondere an dem ersten Ende (11) und/oder dem zweiten Ende (12) des extrudierten Profils (10) angeordnet ist,
eine Zierleiste (40), insbesondere eine Zierleiste aus Edelstahl, insbesondere aus verchromtem Edelstahl, die entlang des extrudierten Profils (10) zusammenwirkt, um an dem extrudierten Profil (10) einzurasten,
wobei die Tür (5) und/oder das Karosserieseitenelement (6) eine Ausklinkung (7) zur Aufnahme und/oder Positionierung des Einsatzes (30) umfasst,
ein Haltemittel (50) der Zierleiste (40), so dass eine Verlagerung der Zierleiste (40) in Bezug auf das extrudierte Profil (10) entlang der Längsrichtung der Zierleiste (40) verhindert wird,
**dadurch gekennzeichnet, dass** die Anordnung (2) einen Einsatz (30) aus steifem Material umfasst, insbesondere einen mindestens teilweise durch das Umspritzungselement (20) umspritzten Einsatz (30), und dass der Einsatz (30) das Haltemittel (50) der Zierleiste (40) umfasst.

2. Anordnung (2) nach dem vorhergehenden Anspruch, **dadurch gekennzeichnet, dass** das Haltemittel (50) eine Verlagerung der Zierleiste (40) in Bezug auf das extrudierte Profil (10) entlang der Querrichtung der Zierleiste (40) verhindert.

3. Anordnung (2) nach Anspruch 1 oder 2, **dadurch gekennzeichnet, dass** das Haltemittel 50) einen Anschlag (51) umfasst.

4. Anordnung (2) nach einem der vorhergehenden Ansprüche, **dadurch gekennzeichnet, dass** das Haltemittel (50) ein Vorsprung (52) ist, der sich senkrecht oder im Wesentlichen senkrecht zu der Längsrichtung der Zierleiste (40) erstreckt.

5. Anordnung (2) nach einem der vorhergehenden Ansprüche, **dadurch gekennzeichnet, dass** die Zierleiste (40) einen Ausschnitt (41) umfasst, der dazu bestimmt ist, an dem Haltemittel (50) in Anlage zu gelangen.

6. Anordnung (2) nach Anspruch 1, 2 oder 3, **dadurch gekennzeichnet, dass** das Haltemittel (50) eine Lasche (53) umfasst, die sich zu einem Innenraum (9) eines solchen Fahrzeugs hin erstreckt, wobei die Lasche (53) an der Zierleiste (40) ausgebildet ist und dazu bestimmt ist, in den Einsatz (30) und/oder in das Umspritzungselement (20) eingefügt zu werden.

7. Fahrzeug, insbesondere Kraftfahrzeug (1), **dadurch gekennzeichnet, dass** es mindestens eine Anordnung (2) nach einem der vorhergehenden Ansprüche umfasst.

## Claims

1. Arrangement (2) of a window seal (3) of a window (4) of a vehicle, in particular a motor vehicle (1), comprising:
a door (5) and/or a body side element (6) of such a vehicle intended to receive such a window (4),
an extruded profile (10) comprising a first end (11) and a second end (12),
an overmoulding element (20) made of flexible material, in particular arranged at the first end (11) and/or the second end (12) of the extruded profile (10),
a trim (40), in particular a trim made of stainless steel, in particular of chrome-plated stainless steel, cooperating along the extruded profile (10) in order to be clip-fastened to the extruded profile (10),
the door (5) and/or the body side element (6) comprising a notch (7) for receiving and/or positioning the insert (30),
a means (50) for holding the trim (40), so as to prevent the trim (40) from moving relative to the extruded profile (10) in the longitudinal direction of the trim (40 ,
**characterized in that** the arrangement (2) comprises an insert (30) made of rigid material, in particular an insert (30) at least partially overmoulded by the overmoulding element (20), and **in that** the insert (30) comprises the means (50) for holding the trim (40).

2. Arrangement (2) according to the preceding claim, **characterized in that** the holding means (50) prevents the trim (40) from moving relative to the extruded profile (10) in the transverse direction of the trim (40).

3. Arrangement (2) according to Claim 1 or 2, **characterized in that** the holding means (50) comprises a stop (51).

4. Arrangement (2) according to one of the preceding claims, **characterized in that** the holding means (50) is a protuberance (52) extending perpendicularly or substantially perpendicularly with respect to the longitudinal direction of the trim (40).

5. Arrangement (2) according to one of the preceding claims, **characterized in that** the trim (40) comprises a cutout (41) intended to come into abutment against the holding means (50).

6. Arrangement (2) according to Claim 1, 2 or 3, **characterized in that** the holding means (50) comprises a tab (53) extending towards a passenger compartment (9) of such a vehicle, the tab (53) being formed on the trim (40) and being intended to fit into the insert (30) and/or into the overmoulding element (20).

7. Vehicle, in particular a motor vehicle (1), **characterized in that** it comprises at least one arrangement (2) according to one of the preceding claims.
